# EUROPÄISCHE PATENTSCHRIFT

(11) **EP 3 021 953 B1**
(45) Veröffentlichungstag und Bekanntmachung des Hinweises auf die Patenterteilung: **25.12.2019**
(21) Anmeldenummer: 14741198.7
(22) Anmeldetag: 26.06.2014
(51) Int. Cl.: B01D 35/027, B01D 35/06, B01D 35/147

(54) **FILTERVORRICHTUNG**
FILTER DEVICE
DISPOSITIF DE FILTRAGE

(30) Priorität: 16.07.2013 DE 102013011866
(43) Veröffentlichungstag der Anmeldung: 25.05.2016
(73) Patentinhaber: RT-Filtertechnik Gmbh, 88048 Friedrichshafen (DE)
(72) Erfinder: STEHLE, Gerhard, 78467 Konstanz (DE); BAUTZ, Marco, 88048 Friedrichshafen (DE)
(74) Vertreter: Bartels und Partner, Patentanwälte
(86) Internationale Anmeldenummer: PCT/EP2014/001741
(87) Internationale Veröffentlichungsnummer: WO 2015/007364

(56) Entgegenhaltungen:
- EP-A1- 2 363 189
- DE-A1- 1 951 668

## Beschreibung

Die Erfindung betrifft eine Filtervorrichtung, mit mindestens einem in einem Gehäuse vorzugsweise austauschbar aufnehmbaren Filterelement, das ein vom zu reinigenden Fluid durchströmbares Filtermedium und an zumindest einem Ende eine Endkappe aufweist, die zur Positionierung des jeweiligen Filterelements in einer Funktionsstellung mit einem Festlegekörper zusammenwirkt, der mit einem abnehmbaren Deckel des Gehäuses verbunden ist, und mit einem am Festlegekörper vorgesehenen Bypassventil.

Filtervorrichtungen dieser Art sind Stand der Technik. Beispielsweise offenbart das Dokument WO 2009/109212 A1 eine Vorrichtung dieser Gattung in Form eines in einen Fluid-Vorratstank einbaubaren Rücklauffilters. Solche In-Tank-Filtervorrichtungen kommen bevorzugt bei mit einem Hydrauliksystem versehenen Arbeitsmaschinen zum Einsatz, beispielsweise bei Baggern, Rad- oder Teleskopladern etc., die mit einer Arbeitshydraulik versehen sind, beispielsweise in Form von mittels Pumpen ansteuerbarer und versorgbarer Hydraulikzylinder. Wie aus dem erwähnten Dokument an sich bekannt, ist im Betrieb das Filterelement von der die Rohseite bildenden Innenseite zu der die Reinseite bildenden Außenseite des Filtermediums hin durchströmt. Durch Fluiddurchlässe in dem in den Tank eintauchenden Filtergehäuse gelangt das abgereinigte Fluid zum Tankinhalt. Um den Austausch eines verbrauchten Filterelementes zu ermöglichen, ist der das betreffende Filterelement in seiner Funktionsstellung positionierende Festlegekörper mit einem abnehmbaren Deckel verbunden und mit diesem bei einem Auswechselvorgang aus dem Gehäuse heraus bewegbar.

Aus EP 2 363 189 A1 ist eine Filtervorrichtung bekannt, bei der ein Bypassschutzsieb in Form eines Filterelementes im Strömungsweg des das Bypassventil durchströmdenden Fluides angeordnet ist, sodass ein Anschluss auch bei geöffnetem Bypassventil vor Verschmutzungen gesichert ist.

Die DE 19 51 668 A1 betrifft einen Rücklauffilter für Flüssigkeiten, zum Einbau in einen Tank, bei dem die zu filtrierende Flüssigkeit in einem Filtergehäuse ein Grob- und ein Feinfilterelement durchströmt und weiterhin ein Steuerorgan vorgesehen ist, das in seiner Arbeitslage in Abhängigkeit vom Verschmutzungsgrad des Feinfilterelementes den Flüssigkeitsstrom durch das Grobfilterelement steuert, wobei ein am Filtergehäuse ein eine Einfüllöffnung verschließender Schraubverschluss mit einem auf das Steuerorgan einwirkenden Betätigungsglied angeordnet ist, welches bei geschlossenem Schraubverschluss das Steuerorgan in Arbeitslage hält und bei abgenommenem Schraubverschluss eine Einstellung des Steuerorganes derart auslöst, dass die Hauptmenge der durch die Einfüllöffnung eingefüllten Flüssigkeit lediglich durch das Grobfilterelement in den Tank gelangt.

Ausgehend von dem Dokument WO 2009/109212 A1 stellt sich die Erfindung die Aufgabe, eine Filtervorrichtung der besagten Gattung zur Verfügung zu stellen, die sich durch ein besonders günstiges Betriebsverhalten auszeichnet.

Erfindungsgemäß ist diese Aufgabe durch eine Filtervorrichtung gelöst, die die Merkmale des Patentanspruches 1 in seiner Gesamtheit aufweist.

Gemäß dem kennzeichnenden Teil des Anspruches 1 besteht eine wesentliche Besonderheit der Erfindung darin, dass am Festlegekörper ein Wandteil vorgesehen ist, das bei der Funktionsstellung ein Trennelement im Gehäuse bildet, das dieses in eine Filterelementkammer und eine an der Ausströmseite des Bypassventils befindliche Bypasskammer teilt, wobei in dieser ein Schutzfilter vorgesehen ist, der von dem aus dem Bypassventil ausströmenden Fluid durchströmbar ist. Anders als beim Stand der Technik, wo bei einem Ansprechen des Bypassventils ungereinigtes Fluid unter Umgehung des Filtermediums zur Außenseite des Filterelements und durch die Fluiddurchlässe des Gehäuses zum Tankinhalt gelangt, tritt bei der Erfindung das aus dem Bypassventil ausströmende Fluid in die von der reinseitigen Filterelementkammer getrennte Bypasskammer ein und verlässt diese erst nach Durchtritt durch den Schutzfilter. Insbesondere bei stärker verschmutzten Fluiden, wie Hydrauliköl, die im Rücklauf zum Tank über die Filtervorrichtung geführt werden, ist die Gefahr vermieden, dass bei einem Ansprechen des Bypassventils grobe Verschmutzungen zum Tankinneren gelangen. Die Erfindung ermöglicht daher eine hohe Systemreinheit und damit ein günstiges Betriebsverhalten der Vorrichtung.

In besonders vorteilhafter Weise kann die Anordnung so getroffen sein, dass das das Trennelement bildende Wandteil des Festlegekörpers in Form einer Scheibe ausgebildet ist, die das zentral gelegene Bypassventil umgibt und sich, bezogen auf die Achse des zugehörigen, hohlzylindrischen Gehäuses, in einer zur Achse senkrechten Radialebene erstreckt und an der Seite der Bypasskammer eine Abstützung für den Schutzfilter bildet. Der Festlegekörper bildet dadurch in Doppelfunktion nicht nur die das Filtergehäuse unterteilende Trennwand, sondern auch den Träger für den in der Bypasskammer vorgesehenen Schutzfilter.

Als Zusatzfunktion kann sich der Festlegekörper bei der Funktionsstellung mit dem Umfangsrand seiner Scheibe auch an der Innenseite der Wand des hohlzylindrischen Gehäuses abstützen, wodurch das Filterelement über den Festlegekörper gegen im Betrieb angreifende Querkräfte gesichert ist.

Mit besonderem Vorteil kann der sich an den Umfangsrand anschließende Bereich der Scheibe den Träger für den Schutzfilter bilden.

Bei besonders vorteilhaften Ausführungsbeispielen ist an dem den Träger bildenden Bereich der Scheibe eine Aufnahme für den Schutzfilter vorgesehen.

Bei Ausführungsbeispielen, bei denen das Filtermedium des Schutzfilters einen zur Achse konzentrischen Hohlzylinder bildet, kann die Anordnung mit besonderem Vorteil so getroffen sein, dass die Aufnahme in einem radialen Abstand vom Umfangsrand der Scheibe eine konzentrische, axial vorstehende Ringrippe aufweist, deren Außenseite eine Anlagefläche für den zugeordneten Endrandbereich des Schutzfilters bildet.

In besonders vorteilhafter Weise kann für den der Aufnahme zugeordneten Endrand des Filtermediums des Schutzfilters eine Einfassung vorgesehen sein, die radial innenseitig an der Anlagefläche der Ringrippe anliegt.

Als Einfassung kann eine am Schutzfilter befindliche Endkappe vorgesehen sein. Alternativ kann die Einfassung durch ein an der Scheibe angeformtes Teil gebildet sein, insbesondere in Zusammenwirkung mit der an der Kreisscheibe axial vorstehenden Ringrippe.

Die Außenseite des Filtermediums des Schutzfilters kann an einem Fluiddurchlässe aufweisenden Stützrohr abgestützt sein, dessen Ende zusammen mit dem betreffenden Endrand des Filtermediums in der Aufnahme an der Scheibe aufgenommen ist. Alternativ kann jedoch auch vorgesehen sein, dass sich die Außenseite des Schutzfilters bei der Funktionsstellung an der Fluiddurchlässe aufweisenden Wand des Gehäuses abstützt und dadurch ein dem Schutzfilter zugehöriges Stützrohr in Wegfall kommt.

Nachstehend ist die Erfindung anhand eines in der Zeichnung dargestellten Ausführungsbeispieles im Einzelnen erläutert. Es zeigen:
- Fig. 1: einen schematisch vereinfachten Längsschnitt einer In-Tank-Filtervorrichtung gemäß dem Stand der Technik;
- Fig. 2: einen in größerem Maßstab in perspektivischer Schrägansicht und in Längsrichtung geschnitten lediglich einen oberen Teilbereich eines Ausführungsbeispieles der Erfindung;
- Fig. 3: den in Fig. 2 gezeigten Teilbereich, wobei der Deckel vom Filtergehäuse abgehoben dargestellt ist, und
- Fig. 4: eine Schnittdarstellung des mittleren, der oberen Endkappe des Filterelementes zugehörigen Bereichs in einer gegenüber Fig. 2 und 3 verdrehten Position.

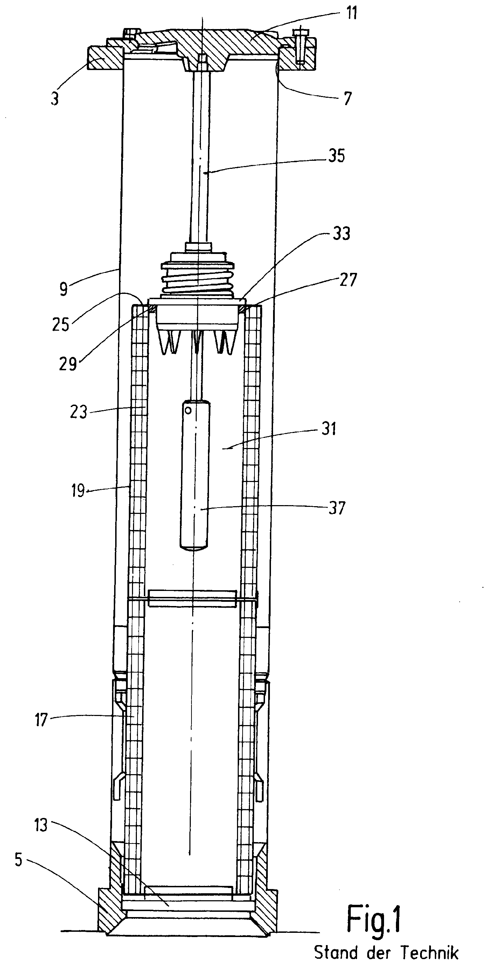

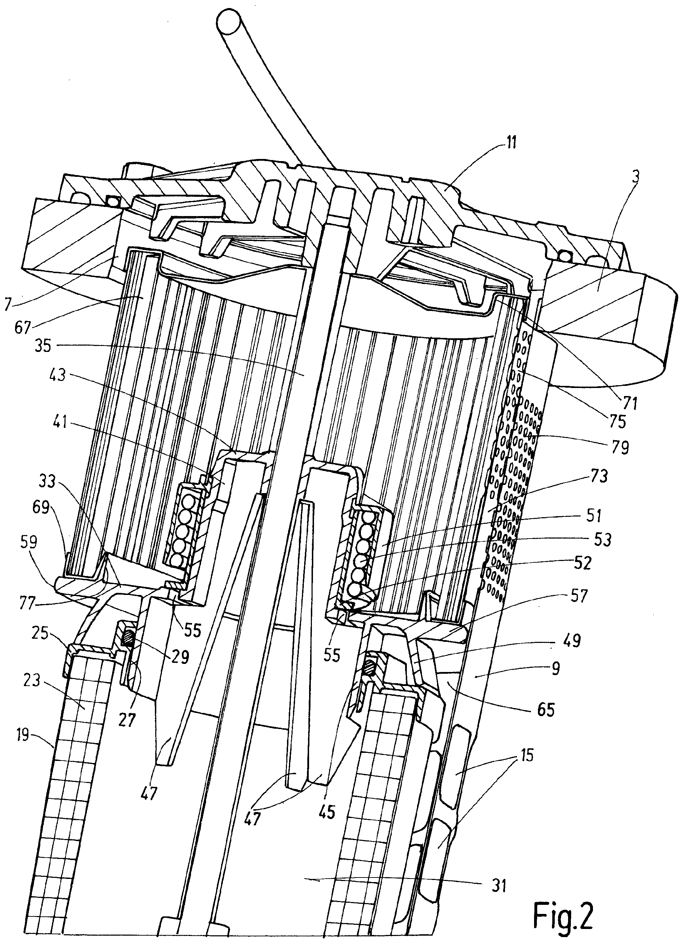

Nachstehend ist die Erfindung anhand eines Beispiels erläutert, bei dem die Filtervorrichtung als Rücklauffilter in Form eines in einen Tank einbaubaren, so genannten In-Tank-Filter ausgelegt ist. Die Fig. 1 zeigt eine Filtervorrichtung gemäß dem in WO 2009/109212 A1 dokumentierten Stand der Technik. In der Zeichnung sind vom zugeordneten Tank, insbesondere in Form eines Tanks zur Bevorratung von Hydrauliköl, jeweils lediglich ein Tankflansch 3 sowie eine untere Tankkammer 5 des im Übrigen nicht dargestellten Tanks angedeutet. Der Tankflansch 3 umgibt eine Tanköffnung 7, in die sich das obere offene Ende eines Filtergehäuses 9 erstreckt. An der Öffnung 7 ist das Gehäuse 9 durch einen abnehmbaren Gehäusedeckel 11 verschließbar. Das hohlzylinderförmige Gehäuse 9 ist an seinem unteren Ende mit der Tankkammer 5 verbunden, die einen Einlaufkanal 13 für das verschmutzte Fluid bildet. In einem Abstand vom unteren Ende weist die Wand des Gehäuses 9 fensterartige Durchlassöffnungen, wie sie nur in Fig. 2 sichtbar und mit 15 bezeichnet sind, für den Austritt des abgereinigten Fluids auf. Die Durchlassöffnungen 15 erstrecken sich nach oben bis zum Bereich des oberen Endes eines im Gehäuse 9 aufnehmbaren Filterelementes, das sich aus einem unteren Grobfilterelement 17 und einem oberen Feinfilterelement 19 zusammensetzt. Die Bauweise des zusammengesetzten Filterelements 17, 19 und die örtliche Zuordnung der Durchlassöffnungen 15 entspricht insoweit dem bekannten Einbaufilter, wie er aus dem zum Stand der Technik erwähnten Dokument WO 2009/109212 A1 an sich bekannt ist. Wie dort offenbart, sind Grobfilterelement 17 und Feinfilterelement 19 über ein Verbindungsteil 21 miteinander verbunden, das durch einen einen Fluiddurchgang bildenden Ringkörper gebildet ist.

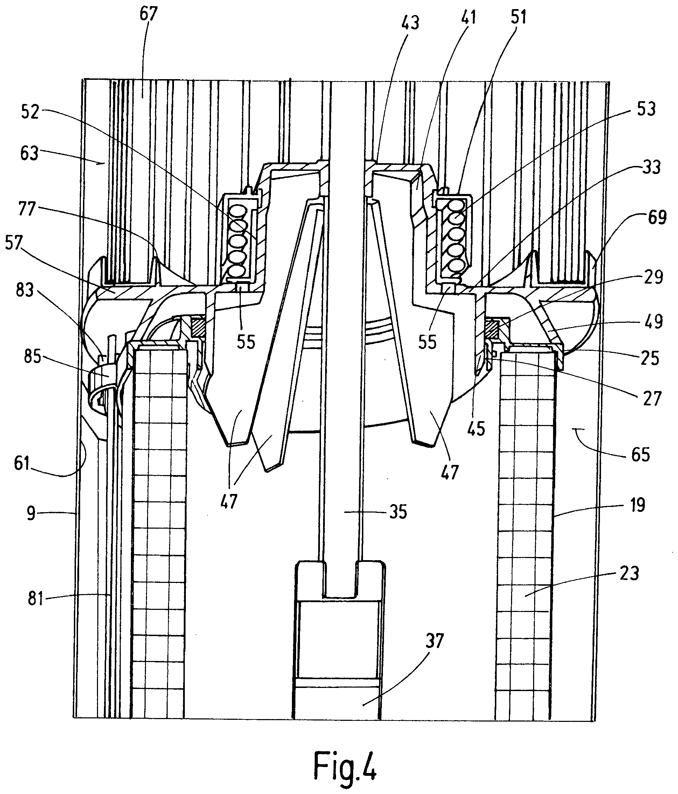

Das Filterelement 17, 19 weist am oberen Ende seines Filtermediums 23 eine Endkappe 25 auf, die, wie es aus den Fig. 2 bis 4 deutlicher ersichtlich ist, eine zentrale Öffnung 27 aufweist, an der sich eine Dichteinrichtung in Form eines O-Ringes 29 befindet. Die Öffnung 27 bildet einen Durchgang zum inneren Filterhohlraum 31 des Filterelements 17, 19. Die Fig. 1 zeigt das Filterelement 17, 19 in seiner Funktionsstellung, wie dies auch in Fig. 2 und 4 dargestellt ist. In der Funktionsstellung ist das Filterelement 17, 19 mittels eines Festlegekörpers 33 gesichert, der seinerseits mit dem Deckel 11 fest verbunden ist. Diese Verbindung erfolgt über einen koaxial zur Achse des zylindrischen Gehäuses verlaufenden, stabartigen Träger 35. Dieser erstreckt sich durch den Festlegekörper 33 hindurch in den Filterhohlraum 31 und weist an seinem freien Ende eine sogenannte Magnetkerze 37 auf, also eine Permanentmagneteinrichtung von ebenfalls an sich bekannter Art.

Die Fig. 2 bis 4, bei denen für gleiche Bauelemente dieselben Bezugszahlen wie bei Fig. 1 benutzt sind, zeigen näheren Einzelheiten eines Ausführungsbeispieles der erfindungsgemäßen Filtervorrichtung. Der Festlegekörper 33 in Form eines vorzugsweise aus Kunststoff gebildeten Formteiles unterscheidet sich gegenüber dem in Fig. 1 gezeigten Stand der Technik dadurch, dass er über den Bereich der Endkappe 27 des Filterelementes 17, 19 hinaus radial erweitert ist. An der vom Filterelement 17, 19 abgewandten Oberseite bildet diese radiale Erweiterung eine im Wesentlichen ebene Scheibe 57, die einen Hohlkörper 41 umgibt. Dieser erstreckt sich in der Art eines Domes 43 koaxial zum Trägerstab 35 axial nach oben und ist vom Trägerstab 35 durchgriffen. An der Unterseite bildet der Hohlkörper 41 einen Stutzen 45, der sich durch die Öffnung 27 der Endkappe 25 in den Filterhohlraum 31 erstreckt und an der Öffnung 27 durch den O-Ring 29 abgedichtet ist. Der Innenraum, des Hohlkörpers 41 einschließlich des Stutzens 45 ist durch fächerartige Rippen 47 verstärkt. Radial außerhalb des Stutzens 45 bildet der Festlegekörper 33 an der Unterseite der Scheibe 57 einen glockenförmigen, axial vorspringenden Abstützkörper 49 der bei der Funktionsstellung an der Oberseite der Endkappe 25 zur Bildung einer axialen Sicherung derselben anliegt. An der Außenseite des Doms 43 des Festlegekörpers 33 befindet sich ein Bypassventil 51, das bei einem entsprechend hohen Staudruck einen das Filtermedium 23 umgehenden Fluidweg bildet. Das Bypassventil 51 weist einen hülsenartigen, bewegbaren Ventilkörper 52 auf, der durch eine Feder 53 in eine Schließstellung vorgespannt ist, in der er einen Fluiddurchgang 55 im Festlegekörper 33 verschließt.

Der Festlegekörper 33 ist über den Bereich des Abstützkörpers 49 hinaus radial erweitert, so dass die Oberseite außerhalb des Zentralbereiches eine ebene Scheibe 57 bildet. Deren Umfangsrand erstreckt sich bei der Funktionsstellung mit ihrem Außenumfang 59 bis zur Innenwand 61 des Gehäuses 9. Für den Festlegekörper 33 bildet daher die Scheibe 57 eine Abstützung gegen im Betrieb am Filterelement 17, 19 wirkende Querkräfte. Gleichzeitig bildet die Scheibe 57 eine Trennwand, die im Gehäuse 9 eine obere Bypasskammer 63, die sich zwischen Scheibe 57 und Gehäusedeckel 11 befindet, von einer darunterliegenden Elementkammer 65 trennt.

An der der Bypasskammer 63 zugewandten Oberseite bildet die Scheibe 57 des Festlegekörpers 33 einen Träger zur Abstützung eines Bypass-Schutzfilters 67. Dieses weist in ähnlicher Weise wie das in der Elementkammer 65 befindliche Filterelement 17, 19, eine hohlzylinderförmige Filtermatte auf, die vorzugsweise plisseeartig gefaltet ist und endseits durch eine untere Endkappe 69 und eine obere Endkappe 71 eingefasst ist. Die Endkappen 69, 71 bilden auch die Einfassung für ein die Außenseite der Filtermatte umgebendes Stützrohr 73 mit Fluiddurchlässen in Form einer Lochung 75. Die untere Endkappe 69 liegt mit ihrer radial innenliegenden Seite an einer Ringrippe 77 an, die in einem radialen Abstand vom Umfangsrand 59, zur Achse konzentrisch, axial vorsteht. An Stelle der Einfassung der Filtermatte mittels der Endkappe 79 könnte auch eine an der Scheibe 57 selbst angeformte Einfassung zu diesem Zweck vorgesehen sein, beispielsweise in Verbindung mit der Ringrippe 77. Auch könnte das Stützrohr 73 des Schutzfilters 67 weggelassen werden. In diesem Falle könnte sich die Filtermatte des Schutzfilters 67 unmittelbar an der Wand des Gehäuses 9 abstützen, die im Bereich der Bypasskammer 63 mit einer Lochung 79 versehen ist, siehe Fig. 2.

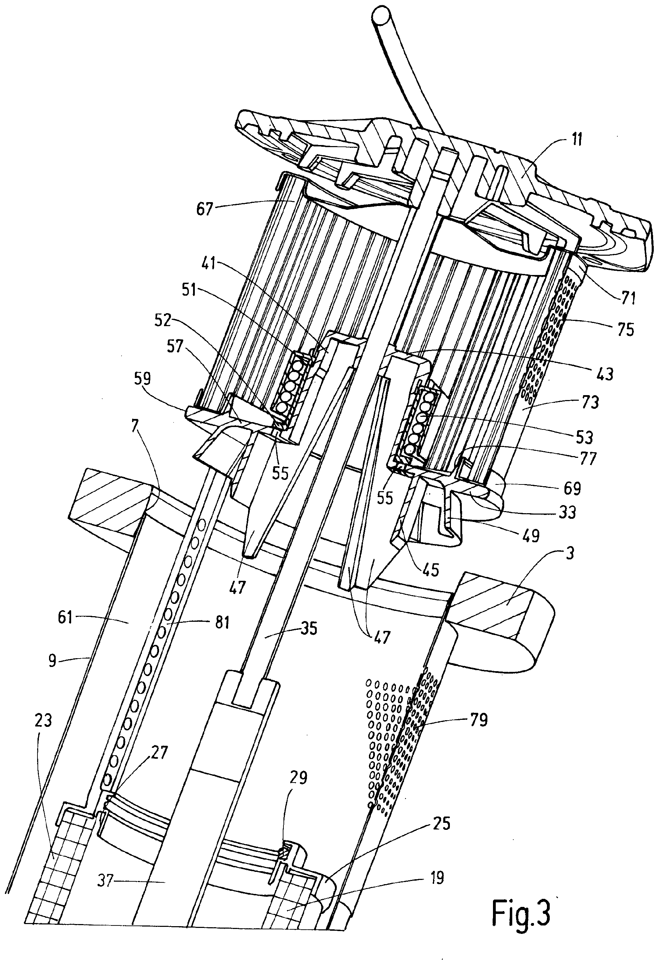

Wie den Fig. 3 und 4 entnehmbar ist weist das gezeigte Ausführungsbeispiel der Filtervorrichtung eine zwischen Festlegekörper 33 und zugeordneter Endkappe 25 wirkende Mitnehmereinrichtung auf, die einen leichten und sicheren Auswechselvorgang verbrauchter Filterelemente 17, 19 ermöglicht. Die Mitnehmereinrichtung weist an mehreren um den Umfang des Filterelementes 17, 19 verteilten Stellen jeweils ein Zugglied in Form einer langgestreckten Leiste 81 auf, die wie in Fig. 4 bei 83 angedeutet ist, an der Unterseite der Scheibe 57 des Festlegekörpers 33 verankert ist. Vorzugsweise sind um den Umfang verteilt drei Leisten 81 vorgesehen, von denen lediglich bei der in Fig. 3 und 4 gezeichneten Drehposition eine Leiste 81 sichtbar ist. Die jeweilige Leiste 81 ist in einer jeweils zugehörigen Lasche 85, die am Außenumfang der Endkappe 25 angebracht ist, verschiebbar. Am freien Ende der Leiste 81 befindet sich ein in der Zeichnung nicht sichtbarer Vorsprung. Wenn für den Austausch eines Filterelementes 17, 19 der Deckel 11 abgenommen und über den Trägerstab 35 der Festlegekörper 33 durch Bewegen des Deckels 11 aus dem Gehäuse 9 herausgenommen wird, bewegt sich der Festlegekörper 33 zunächst vom Filterelement 17, 19 weg, wobei die Leiste 81 in der Lasche 85 gleitet. Nach einer entsprechenden Weglänge des Trennvorganges, dieser Zustand ist in Fig. 3 dargestellt, läuft der Vorsprung der Leiste 81 an der jeweiligen Lasche 85 an, die für den Vorsprung einen Anschlag bildet, wodurch die Mitnehmereinrichtung aktiviert wird, so dass bei weiterer Bewegung die Endkappe 25 und damit das Filterelement 17, 19 mit bewegt wird und somit aus dem Tank aushebbar ist. Die Leisten 81 bilden daher sozusagen eine Handhabe für bequeme Durchführung von Austauschvorgängen.

## Patentansprüche

1. Filtervorrichtung, mit mindestens einem in einem Gehäuse (9) vorzugsweise austauschbar aufnehmbaren Filterelement (17, 19), das ein vom zu reinigenden Fluid durchströmbares Filtermedium (23) und an zumindest einem Ende eine Endkappe (25) aufweist, die zur Positionierung des jeweiligen Filterelements (17, 19) in einer Funktionsstellung mit einem Festlegekörper (33) zusammen wirkt, der mit einem abnehmbaren Deckel (11) des Gehäuses (9) verbunden ist, und mit einem am Festlegekörper (33) vorgesehenen Bypassventil (51), **dadurch gekennzeichnet, dass** am Festlegekörper (33) ein Wandteil (57) vorgesehen ist, das bei der Funktionsstellung ein Trennelement im Gehäuse (9) bildet, das dieses in eine Filterelementkammer (65) und eine an der Ausströmseite des Bypassventils (51) befindliche Bypasskammer (63) teilt, und dass in dieser ein Schutzfilter (67) vorgesehen ist, der von dem aus dem Bypassventil (51) ausströmenden Fluid durchströmbar ist.

2. Filtervorrichtung nach Anspruch 1, **dadurch gekennzeichnet, dass** das das Trennelement bildende Wandteil des Festlegekörpers (33) in Form einer Scheibe (57) ausgebildet ist, die das zentral gelegene Bypassventil (51) umgibt und sich, bezogen auf die Achse des zugehörigen, hohlzylindrischen Gehäuses (9), in einer zur Achse senkrechten Radialebene erstreckt und an der Seite der Bypasskammer (63) eine Abstützung für den Schutzfilter (67) bildet.

3. Filtervorrichtung nach Anspruch 1 oder 2, **dadurch gekennzeichnet, dass** sich der Festlegekörper (33) bei der Funktionsstellung mit dem Umfangsrand (59) der Scheibe (57) an der Innenseite (61) der Wand des hohlzylindrischen Gehäuses (9) abstützt.

4. Filtervorrichtung nach einem der vorstehenden Ansprüche, **dadurch gekennzeichnet, dass** der sich an den Umfangsrand (59) anschließende Bereich der Scheibe (57) den Träger für den Schutzfilter (67) bildet.

5. Filtervorrichtung nach einem der vorstehenden Ansprüche, **dadurch gekennzeichnet, dass** an dem den Träger bildenden Bereich der Scheibe (57) eine Aufnahme (69, 77) für den Schutzfilter (67) vorgesehen ist.

6. Filtervorrichtung nach einem der vorstehenden Ansprüche, **dadurch gekennzeichnet, dass** das Filtermedium des Schutzfilters (67) einen zur Achse konzentrischen Hohlzylinder bildet und dass die Aufnahme in einem radialen Abstand vom Umfangsrand (59) der Scheibe (57) eine konzentrische, axial vorstehende Ringrippe (77) aufweist, deren Außenseite eine Anlagefläche für den zugeordneten Endrandbereich (69) des Schutzfilters (67) bildet.

7. Filtervorrichtung nach einem der vorstehenden Ansprüche, **dadurch gekennzeichnet, dass** für den der Aufnahme (77) zugeordneten Endrand des Filtermediums des Schutzfilters (67) eine Einfassung (69) vorgesehen ist, die radial innenseitig an der Anlagefläche der Ringrippe (77) anliegt.

8. Filtervorrichtung nach einem der vorstehenden Ansprüche, **dadurch gekennzeichnet, dass** als Einfassung eine am Schutzfilter (67) befindliche Endkappe (69) vorgesehen ist.

9. Filtervorrichtung nach einem der vorstehenden Ansprüche, **dadurch gekennzeichnet, dass** die Außenseite des Filtermediums des Schutzfilters (67) an einem Fluiddurchlässe (75) aufweisenden Stützrohr (73) abgestützt ist, dessen Ende zusammen mit dem betreffenden Endrand des Filtermediums in der Aufnahme (69) an der Scheibe (57) aufgenommen ist.

10. Filtervorrichtung nach einem der vorstehenden Ansprüche, **dadurch gekennzeichnet, dass** bei der Funktionsstellung die Außenseite des Schutzfilters (67) an der Fluiddurchlässe (79) aufweisenden Wand des Gehäuses (9) abgestützt ist.

## Claims

1. Filter device with at least one preferably exchangeable filter element (17, 19) that can be mounted in a housing (9), said filter element comprising a filter medium (23) through which the fluid to be cleaned can flow and an end cap (25) at at least one end, said end cap acting together with a fixing body (33) to position the respective filter element (17, 19) in a functional position, said fixing body being connected to a removable lid (11) of the housing (9), and with a bypass valve (51) provided on the fixing body (33), **characterised in that** a wall portion (57) is provided on the fixing body (33), said wall portion forming a separating element in the housing (9) in the functional position, said separating element dividing the housing into a filter element chamber (65) and a bypass chamber (63) located on the outflow side of the bypass valve (51), and **in that** a protective filter (67) is provided in said bypass chamber, through which filter the fluid flowing out of the bypass valve (51) can flow.

2. Filter device according to claim 1, **characterised in that** the wall portion of the fixing body (33) forming the separating element is designed in the form of a disc (57), which surrounds the bypass valve (51), which is located in the centre, and extends in a radial plane perpendicular to the axis of the associated hollow, cylindrical housing (9) and forms a support for the protective filter (67) on the side of the bypass chamber (63).

3. Filter device according to either claim 1 or claim 2, **characterised in that**, in the functional position, the fixing body (33) is supported with the peripheral edge (59) of the disc (57) on the inner side (61) of the wall of the hollow, cylindrical housing (9).

4. Filter device according to any one of the preceding claims, **characterised in that** the region of the disc (57) adjacent to the peripheral edge (59) forms the substrate for the protective filter (67).

5. Filter device according to any one of the preceding claims, **characterised in that** a mount (69, 77) for the protective filter (67) is provided in the region of the disc (57) forming the substrate.

6. Filter device according to any one of the preceding claims, **characterised in that** the filter medium in the protective filter (67) forms a hollow cylinder that is concentric with the axis, and **in that** the mount comprises a concentric, axially protruding annular rib (77) at a radial distance from the peripheral edge (59) of the disc (57), the outer side of said rib forming a contact face for the associated end edge region (69) of the protective filter (67).

7. Filter device according to any one of the preceding claims **characterised in that** an edging (69) is provided for the end edge of the filter medium in the protective filter (67) that is assigned to the mount (77), the radial inner side of said edging being in contact with the contact face of the annular rib (77).

8. Filter device according to any one of the preceding claims **characterised in that** an end cap (69) located on the protective filter (67) is provided as an edging.

9. Filter device according to any one of the preceding claims **characterised in that** the outer side of the filter medium in the protective filter (67) is supported on a support tube (73) comprising fluid openings (75), the end of said tube being held in the mount (69) on the disc (57) together with the relevant end edge of the filter medium.

10. Filter device according to any one of the preceding claims **characterised in that**, in the functional position, the outer side of the protective filter (67) is supported on the wall of the housing (9) comprising fluid openings (79).

## Revendications

1. Dispositif de filtration, comprenant au moins un élément (17, 19) de filtre pouvant être logé, de préférence de manière remplaçable, dans une enveloppe (9) et ayant un milieu (23) filtrant pouvant être traversé par du fluide à épurer et, à au moins une extrémité, une coiffe (25) d'extrémité, qui, pour la mise en position de l'élément (17, 19) de filtre respectif dans une position fonctionnelle, coopère avec une pièce (33) de fixation reliée à un couvercle (11) pouvant être retiré de l'enveloppe (9), et comprenant une soupape (51) de dérivation prévue sur la pièce (33) de fixation, **caractérisé en ce qu'**il est prévu sur la pièce (33) de fixation une partie (57) de paroi, qui, en la position fonctionnelle, forme un élément de séparation dans l'enveloppe (9), qui subdivise celle-ci en une chambre (65) d'élément de filtre et en une chambre (63) de dérivation se trouvant du côté de sortie de la soupape (51) de dérivation et **en ce qu'**il est prévu dans cette chambre (63) un filtre (67) de protection, qui peut être traversé par du fluide sortant de la soupape (51) de dérivation.

2. Dispositif de filtration suivant la revendication 1, **caractérisé en ce que** la partie de paroi, formant l'élément de séparation, de la pièce (33) de fixation, est constituée sous la forme d'un disque (57), qui entoure la soupape (51) de dérivation disposée centralement et s'étend, rapporté à l'axe de l'enveloppe (9) cylindrique creuse associée, dans un plan radial perpendiculairement à l'axe et forme, du côté de la chambre (63) de dérivation, un appui pour le filtre (67) de protection.

3. Dispositif de filtration suivant la revendication 1 ou 2, **caractérisé en ce que** la pièce (33) de fixation s'appuie en la position fonctionnelle par le bord (59) de pourtour du disque (57) sur la face (61) intérieure de la paroi de l'enveloppe (9) cylindrique creuse.

4. Dispositif de filtration suivant l'une des revendications précédentes, **caractérisé en ce que** la partie, se raccordant au bord (59) de pourtour, du disque (57) forme le support du filtre (67) de protection.

5. Dispositif de filtration suivant l'une des revendications précédentes, **caractérisé en ce qu'**il est prévu sur la partie, formant le support, du disque (57) un logement (69, 77) pour le filtre (67) de protection.

6. Dispositif de filtration suivant l'une des revendications précédentes, **caractérisé en ce que** le milieu filtrant du filtre (67) de protection forme un cylindre creux concentrique à l'axe et **en ce que** le logement a, à une distance radiale du bord (59) de pourtour du disque (57), une nervure (77) annulaire concentrique en saillie axialement, dont le côté extérieur forme une surface de contact pour la partie (69) de bord d'extrémité associée du filtre (67) de protection.

7. Dispositif de filtration suivant l'une des revendications précédentes, **caractérisé en ce qu'**il est prévu, pour le bord d'extrémité, associé au logement (77), du milieu filtrant du filtre (67) de protection, une bordure (69), qui s'applique, du côté intérieur radialement, à la surface de contact de la nervure (77) annulaire.

8. Dispositif de filtration suivant l'une des revendications précédentes, **caractérisé en ce qu'**il est prévu comme bordure une coiffe (69) d'extrémité se trouvant sur le filtre (67) de protection.

9. Dispositif de filtration suivant l'une des revendications précédentes, **caractérisé en ce que** le côté extérieur du milieu filtrant du filtre (67) de protection s'appuie sur un tube (73) d'appui, qui a des traversées (75) pour du fluide et dont l'extrémité est, ensemble avec le bord d'extrémité concerné du milieu filtrant, reçue dans le logement (69) du disque (57).

10. Dispositif de filtration suivant l'une des revendications précédentes, **caractérisé en ce qu'**en la position fonctionnelle, le côté extérieur du filtre (67) de protection s'appuie sur la paroi, ayant des traversées (79) pour du fluide, de l'enveloppe (9).
